# EUROPEAN PATENT APPLICATION

(11) **EP 1 052 836 A2**
(43) Date of publication of application: **15.11.2000**
(21) Application number: 00109169.3
(22) Date of filing: 08.05.2000
(51) Int. Cl.: H04M 3/42, H04M 1/247

(54) **Method for configuring a telephone's keys to access network services**

(30) Priority: 11.05.1999 AU 2806599; 11.04.2000 AU 2765800
(71) Applicant: ALCATEL, 75008 Paris (FR)
(72) Inventor: Leventler, Gulden, Abbotsford, New South Wales 2046 (AU); Lemaire, Alain, 24120 Terrasson (FR); Le Creff, Michael, 95450 Vigny (FR)
(74) Representative: Dreiss, Fuhlendorf, Steimle & Becker, Patentanwälte

(57) **Abstract**

A method of configuring the keys of a telephone connected to a network services enhanced exchange whereby network services can be accessed. According to the method, data representing telephone key configuration parameters are stored in a database that is operatively associated with the server. The telephone keys can be configured by establishing a connection between the server and the telephone and downloading a required configuration parameters into the telephone's processor.

## Description

### Technical Field

This invention relates to telephone switching systems that can provided various network services to a telephone connected thereto, and in particular to a method of downloading data relating to parameters of the network services, from a remote server to enhance and simplify the user/telephone interface for accessing network services.

### Background of the Invention:

Network services, such as, for example, "Call Waiting", Auto Call Back," and "Call Forward" are exchange based and may, for example, be provided by a Centrex or Easy Call enhanced switching system.

A known method of activating the network services comprises a sequence of key operations by the user using the telephone's keypad, the sequence usually being obtained from instructions in the telephone's user manual. For example, to turn on "Call Waiting" the user enters the sequence * 4 3 # and to turn off "Call Waiting" the user must enter # 4 3 #.

A disadvantage of the known method is that it is cumbersome and prone to user error. Another disadvantage of the known method is that any new network features that are introduced will have to be encoded by the user.

### Summary of the Invention:

According to a first aspect of the present invention there is provided in a telephone that includes a line terminal means for connection to an exchange line, a data communication means, a processor means operatively associated with a memory means, and a plurality of keys operatively associated with said processor means, a method for configuring the telephone's keys to access network services provided by a network services enhanced switching system, the said method comprising the steps of:
- provide a remote server means having an associated data storage means that includes data representing key configuration parameters;
- establish a connection between said server means and said telephone via said switching system;
- select key configuration parameters for one or more desired network services;
- enable said remote server means to execute retrieval of stored data that corresponds to the selected configuration parameters;
- convert retrieved configuration parameter data into a form that is compatible with said telephone's data communication means;
- download converted configuration parameter data to said telephone's processor means where it is processed and stored in said associated memory means, whereupon configuration of the telephone's keys is executed.

According to a second aspect of the present invention there is provided in a telephone that includes a line terminal means for connection to an exchange line, a data communication means, a processor means operatively associated with a memory means, and a plurality of keys operatively associated with said processor means, a method for configuring the telephone's keys to access network services provided by a network services enhanced switching system, the said method comprising the steps of:
- provide a local server means having an associated data storage means that includes data representing key configuration parameters;
- establish a direct connection between said local server means and the telephone's line terminal means or exchange line connected thereto;
- select configuration parameters for one or more desired network services;
- enable said local server means to execute retrieval of stored data that corresponds to the selected configuration parameters;
- convert retrieved configuration parameter data into a form that is compatible with said telephone's data communication means;
- download converted configuration parameter data to said telephone's processor means where it is processed and stored in said associated memory means, whereupon configuration of the telephone's keys is executed.

Preferably, the portable processor means is connected to the telephone's line terminals.

### Brief description of Drawings:

In order that the invention may be readily carried into effect, embodiments thereof will now be described in relation to the accompanying drawings, in which:
Figure 1 is a block diagram showing a connection of a telephone to a server via a centrex enhanced switching system, according to a first embodiment of the present invention;

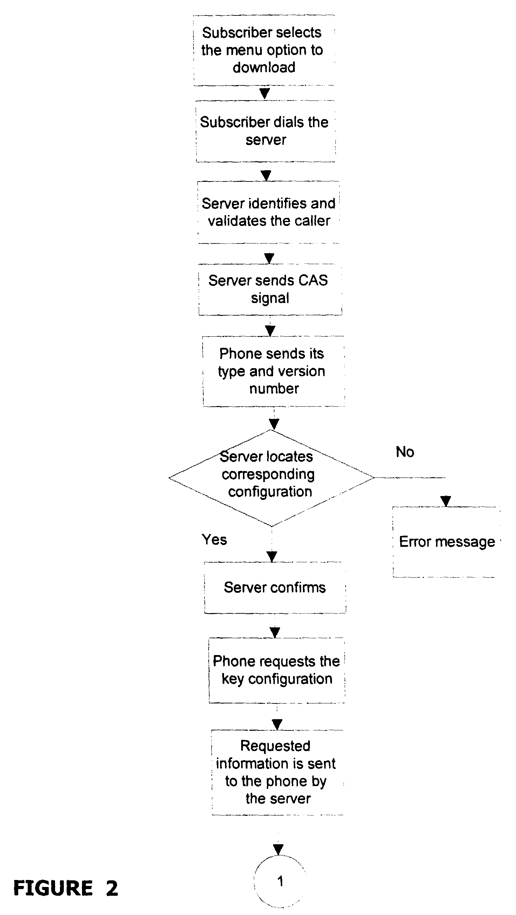

Figures 2 and 3 show flow charts of actions executed during subscriber initiated downloading of network service parameter data from the database associated with the server to the telephone, according to the embodiment shown in Figure 1;
Figure 4 is a block diagram of a second embodiment of the present invention:
Figure 5 shows a flow chart of actions executed during the downloading of network service parameter data using the second embodiment shown in Fig. 4
Figure 6 is a block diagram of a third embodiment of the present invention;
Figure 7 shows a flow chart of actions executed during the downloading of network service parameter data using the third embodiment shown in Fig 6,
Figure 8 is a block diagram of a telephone adapted to receive downloaded network service parameter data, according to the present invention.

### Detailed Description of the Invention:

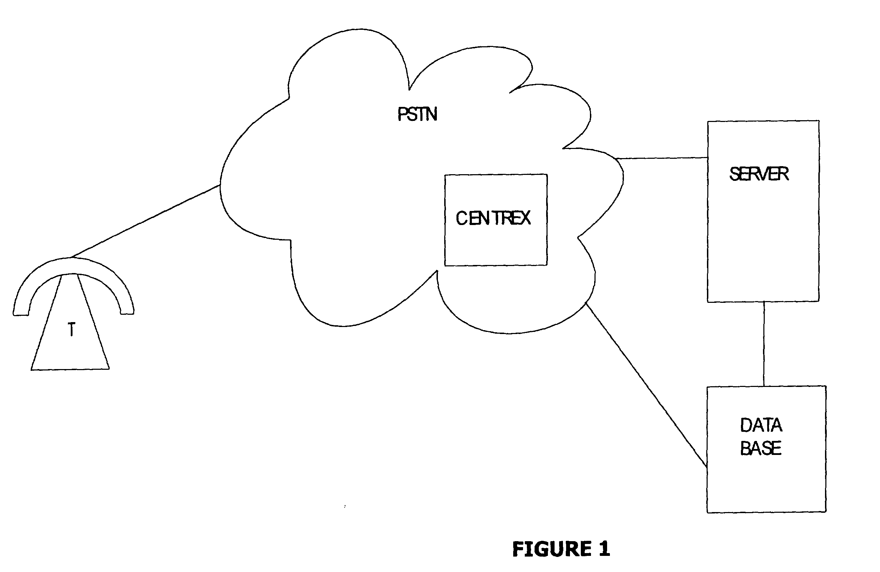

Referring to Fig. 1, a telephone (T) is connected, via a centrex enhanced public switched telephone network (PSTN), to a remote server operatively associated with a database in which data representing various network service parameters are stored together with data representing parameters relating to key assignment of respective network services. Also stored in the database are data representing parameters of the telephone's specifications, exchange number. Network services whose parameters are stored may include:
Call Forward.
Call Return.
Call Pickup
Call Waiting.
Voice Mail.
Display of unwanted call - Malicious call Trace.
Calling Line Identification Restriction.
Call Waiting.
Auto Call Back.

Each of the aforementioned network services is assigned to a dedicated key by the downloaded data.

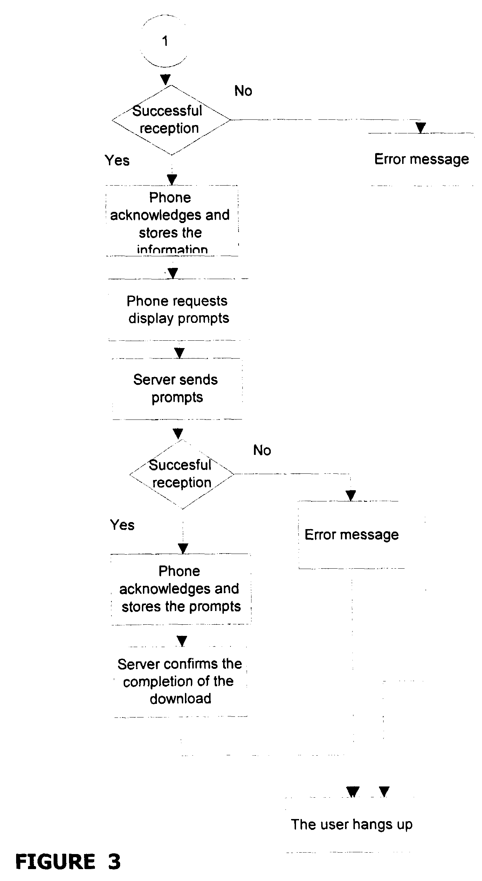

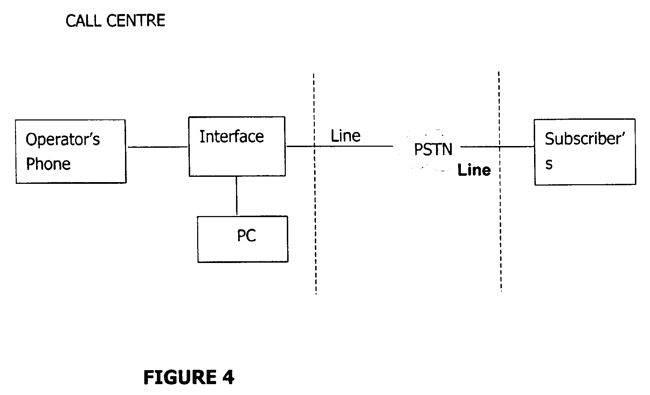

Referring to the flow chart shown in Figs. 3 and 4, in order to download the data relating to the network services parameters, the user:
Selects a menu option associated with the telephone to "download";
The user dials the server's exchange number and establishes a connection with the server;
The server identifies and validates the user's telephone line;
The server send a Customer Alerting Signal (CAS);
The telephone sends data representing its type and version number which has been encoded into its memory during manufacture;
The server looks up the identified users telephone configuration stored in the database, and if successfully located, sends a confirmation signal;
The telephone sends a signal requesting key configuration of the network services;
The requested data is sent to the telephone;
If the data is successfully received, the telephone acknowledges and stores the data in its memory;
The telephone requests display prompts;
The server sends data representing the display prompts;
Upon successful reception of the requested display prompts, the telephone acknowledges and stores the display prompt data in its memory;
The server confirms the completion of the download;
The user hangs up.

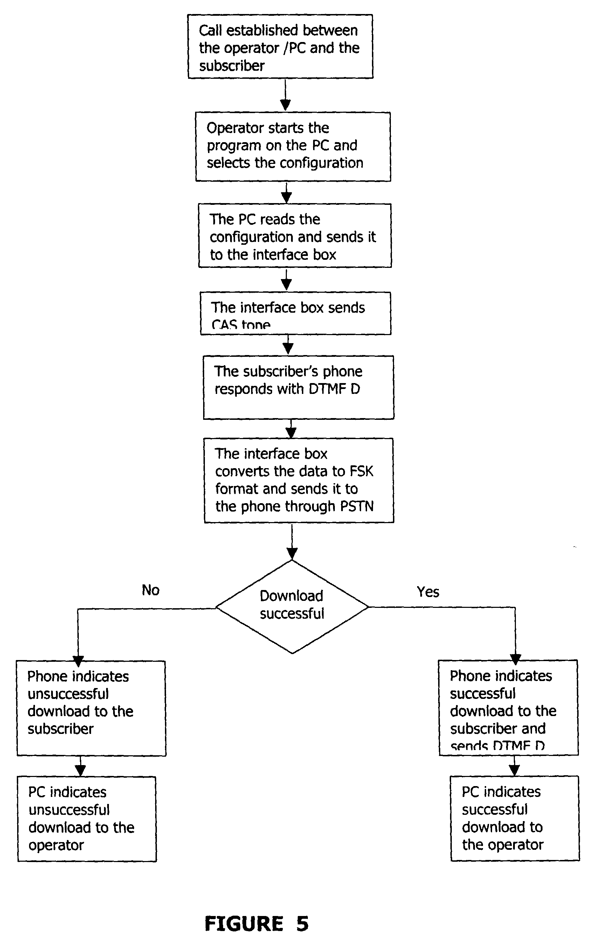

Referring to Fig. 4, in this embodiment the configuration of the subscriber's telephone is controlled by an operator at a call centre after either the subscriber calls the call centre to request network services, or the operator calls the subscriber to offer network services, thereby establishing a connection between a server, in the form of a PC, at the call centre and the telephone to be configured. Referring to the flow chart shown in Fig.5:
A connection is established between the PC at the call centre and the subscriber's telephone via the PSTN;
The operator starts the program on the PC and selects the required key configuration data for the telephone;
The PC reads the selected configuration data and sends it to an interface box;
The interface box sends CAS tone to the telephone;
The telephone responds with DTMF D tone;
The interface box converts the selected key configuration data to FSK format and transmits it to the telephone via the PSTN;
Upon a successful download, the telephone's display indicates a successful download to the telephone user, and transmits DTMF D tone to the call centre to enable an indication of the successful download to the PC. If the download is unsuccessful, DTMF D tone is not transmitted thereby indicating an unsuccessful download to the PC.

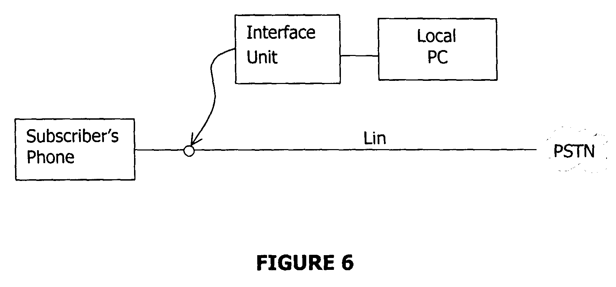

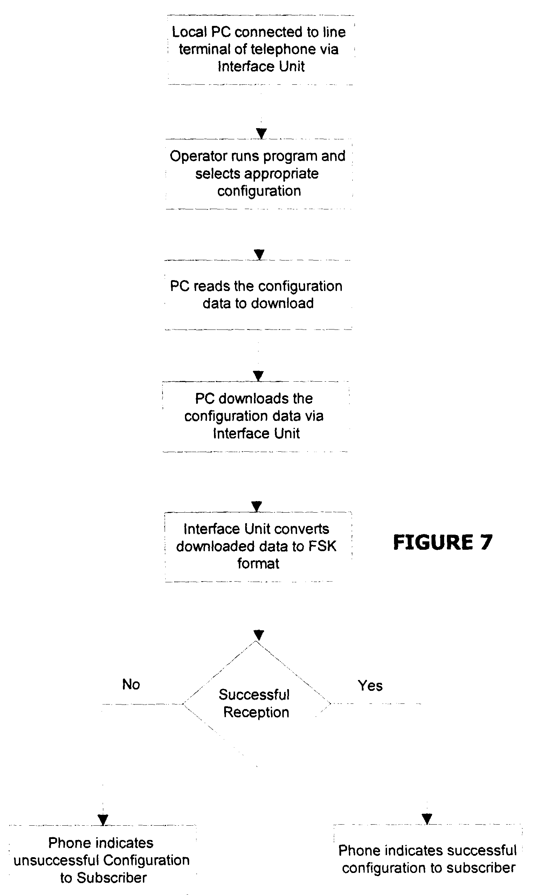

Referring to Fig. 6, in this embodiment a service person can download configuration data to a subscriber's telephone from a portable PC whose memory contains data that corresponds to configuration parameters relating to the telephone. The PC is temporarily connected to any point along the subscriber's telephone line, preferably the telephone's line terminals and the data is downloaded into the telephone's local processor via an interface unit which converts the downloaded data from the PC into FSK mode. Referring to the flow chart shown in Fig. 7:
A connection is established between the telephone and the PC by connecting the PC to the telephone's line terminals via an interface unit;
The service person runs a program and selects an appropriate configuration for the telephone;
The PC reads the selected configuration data;
The PC downloads the selected configuration data via the interface unit;
The interface unit converts the downloaded data to FSK format;
If the download is successful, the telephone's display indicates a successful download. If unsuccessful, the telephone's display will indicate this.

The method described in relation to figures 6 & 7 can be adapted to configure keys of a telephone during the telephone's manufacturer. A newly assembled telephone can be connected to a local server located at the site of manufacturer and configured according to the invention.

Preferably, during download, the telephone communicates with the server using DTMF signals, and the server communicates with the telephone using FSK mode signals.

Preferably, configuration data is also downloaded which enables the telephone to prevent the user from accessing a stored facility that would be incompatible with the state of the telephone at that time. For example, the user would be prevented from activating the "Call Forward" facility during conversation. If it were attempted the request would be ignored.

Preferably, configuration data is also downloaded which instructs the telephone to go into particular state after a particular facility is selected. For example, if "Call Pickup is selected, the telephone goes from the idle state to conversation state.

Preferably, the key means is configured such that frequently used network services are accessed by labelled keys, whereas less frequently used network services are accessed by scrolling through prompt information displayed on the display means.

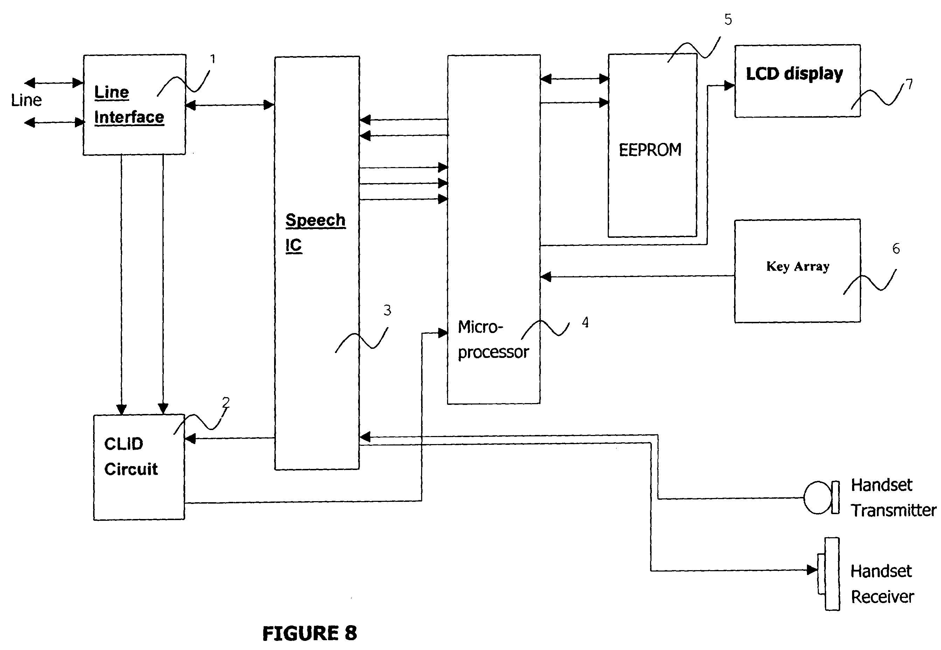

Referring to Fig. 8, the telephone (T) adapted to be used in the above described method includes a line interface 1, a calling line identification (CLID) circuit 2, a speech IC 3, a microprocessor 4, a non-volatile memory 5 in the form of an electrically erasable programmable read-only memory (EEPROM), an array of keys 6 and a LC display 7.

The CLID circuit 2 is utilised as a communication means to receive serial FSK data transmitted by the server during a download operation. The received FSK data is processed by the CLID circuit to produce bytes that are presented to the microprocessor. The microprocessor stores the bytes in the memory 5.

## Claims

1. In a telephone that includes a line terminal means for connection to an exchange line, a data communication means, a processor means operatively associated with a memory means, and a plurality of keys operatively associated with said processor means, a method for configuring the telephone's keys to access network services provided by a network services enhanced switching system, the said method comprising the steps of:
- provide a remote server means having an associated data storage means that includes data representing key configuration parameters;
- establish a connection between said server means and said telephone via said switching system;
- select key configuration parameters for one or more desired network services;
- enable said remote server means to execute retrieval of stored data that corresponds to the selected configuration parameters;
- convert retrieved configuration parameter data into a form that is compatible with said telephone's data communication means;
- download converted configuration parameter data to said telephone's processor means where it is processed and stored in said associated memory means, whereupon configuration of the telephone's keys is executed.

2. A method as claimed in claim 1, wherein the connection is established between said server means and said telephone by the telephone user.

3. A method as claimed in claim 1, wherein the connection is established between said server means and said telephone by an operator at a control centre.

4. In a telephone that includes a line terminal means for connection to an exchange line, a data communication means, a processor means operatively associated with a memory means, and a plurality of keys operatively associated with said processor means, a method for configuring the telephone's keys to access network services provided by a network services enhanced switching system, the said method comprising the steps of:
- provide a local server means having an associated data storage means that includes data representing key configuration parameters;
- establish a direct connection between said local server means and the telephone's line terminal means or exchange line connected thereto;
- select configuration parameters for one or more desired network services;
- enable said local server means to execute retrieval of stored data that corresponds to the selected configuration parameters;
- convert retrieved configuration parameter data into a form that is compatible with said telephone's data communication means;
- download converted configuration parameter data to said telephone's processor means where it is processed and stored in said associated memory means, whereupon configuration of the telephone's keys is executed.

5. A method as claimed in claim 4, wherein said wherein said telephone is located at a subscriber's premises, said direct connection between the local server means and said line terminal means being established at the subscriber's premises.

6. A method as claimed in claim 4, wherein said telephone is located at a site of manufacturer of the telephone, said direct connection between the local server means and said line terminal means being established at the site of manufacturer.

7. A method as claimed in any one of the preceding claims, wherein said downloaded configuration data includes data to configure the said telephone such that the user is barred from accessing a predetermined network service when said telephone is in a predetermined state or states.

8. A method as claimed in any one of the preceding claims, wherein said downloaded configuration data includes data to configure the said telephone such that the telephone is brought into a predetermined state when a predetermined network service is accessed.

9. A method as claimed in any one of the preceding claims, wherein said downloaded configuration data includes data to configure the said telephone such that only predetermined network services may be directly accessed by operation of network service key means, remaining network services being accessed from information displayed on said display means.

10. A method as claimed in any one of the preceding claims, wherein said downloaded configuration data includes display prompt configuration data.

11. A method substantially as herein described with reference to Figures 1 to 8 of the accompanying drawings.

12. A telephone arrangement for use with the method as claimed in any one of the preceding claims, said arrangement including a line terminal means for connection to an exchange line, a data communication means, a processor means operatively associated with a memory means, a display means, and a plurality of dedicated network service key means, said data communication means, said processor means and said memory means being arranged to receive and store network configuration data from said remote server means to configure said network service key means, whereby a selected network service can be accessed by operation of an assigned network service key means.

13. A telephone arrangement as claimed in claim 12, wherein said data communication means comprises a calling line identification circuit means.

14. A telephone as claimed in claims 12 or 13, wherein said memory means is an electrically erasable programmable read-only memory.

15. A telephone arrangement substantially as herein described with reference to Figure 8 of the accompanying drawings.
